(19) Europäisches Patentamt / European Patent Office / Office européen des brevets

(11) **EP 3 745 081 B1**

(12) **EUROPÄISCHE PATENTSCHRIFT**

(45) Veröffentlichungstag und Bekanntmachung des Hinweises auf die Patenterteilung:
**22.03.2023 Patentblatt 2023/12**

(21) Anmeldenummer: **19177032.0**

(22) Anmeldetag: **28.05.2019**

(51) Internationale Patentklassifikation (IPC):
**G01B 11/00** (2006.01)    **G01B 11/02** (2006.01)
**G01B 11/03** (2006.01)    **G01B 11/24** (2006.01)

(52) Gemeinsame Patentklassifikation (CPC):
**G01B 11/02; G01B 11/002; G01B 11/03;
G01B 11/24**

(54) **POSITIONSDETEKTOR UND VERFAHREN ZUR 3D-POSITIONSBESTIMMUNG**

POSITION DETECTOR AND METHOD FOR 3D POSITIONING

DÉTECTEUR DE POSITION ET PROCÉDÉ DE DÉTERMINATION TRIDIMENSIONNELLE DE POSITION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**02.12.2020 Patentblatt 2020/49**

(73) Patentinhaber: **TECAN TRADING AG**
**8708 Männedorf (CH)**

(72) Erfinder:
• **SCHINZEL, Fred**
**8708 Männedorf (CH)**
• **MONTI, Claudio**
**8707 Uetikon am See (CH)**
• **WOLF, Markus**
**8708 Männedorf (CH)**

(74) Vertreter: **Troesch Scheidegger Werner AG**
**Schwäntenmos 14**
**8126 Zumikon (CH)**

(56) Entgegenhaltungen:
**DE-A1-102006 038 161    US-A- 5 486 692
US-A- 5 731 870    US-A1- 2015 330 775
US-A1- 2016 291 049**

**Beschreibung**

Die vorliegende Erfindung betrifft einen Positionsdetektor und ein Verfahren zur 3D-Positionsbestimmung eines Objekts in einem Positionsbestimmungsraum. Weitere Aspekte der Erfindung betreffen ein Robotersystem mit dem erfindungsgemässen Positionsdetektor, ein Verfahren zur Bestimmung räumlicher Koordinaten, ein Verfahren zum Betrieb eines Robotersystems, insbesondere eines Pipettierrobotersystems, Anwendungen des Verfahrens und ein System zur Bestimmung von räumlichen Koordinaten eines Objekts.

Positionsdetektoren werden in verschiedenen Situationen verwendet, in denen eine Position eines Objekts in drei Koordinatenrichtung genau bekannt sein sollte. Im Folgenden wird als illustratives konkretes Beispiel einer solchen Situation die Positionsbestimmung einer Pipettenspitze diskutiert.

Aufgrund von Fertigungstoleranzen bei der Herstellung einer Pipette oder aufgrund von Montagetoleranzen beim Aufnehmen einer Pipettenspitze unterliegt die relative Position einer Pipettenspitze gegenüber einer Aufnahme der Pipette Variationen. Auch bei genauer und reproduzierbarer Positionierung der Aufnahme der Pipette beispielsweise durch einen Pipettierroboter, können die Variationen in der Position der Pipettenspitze allenfalls verhindern, dass kleine Objekte, wie die Wells einer Wellplatte, ausreichend zuverlässig mit der Pipettenspitze erreicht werden können. Qualität und Materialwahl der Pipettenspitze haben eine Auswirkung auf das Ausmass der Variation in der Position der Pipettenspitze und führen allenfalls zum Ausschluss der Verwendung von Wellplatten mit kleinem Wellabstand.

Aus der Patentschrift EP 1 489 425 B1 ist ein Positionsdetektor in Form einer Platte mit Aussenabmessungen einer Standardmikroplatte bekannt, welcher mittels Abtaststrahlen zweier Lichtschranken, deren Strahlrichtungen nicht parallel zu den Aussenkanten der Platte verlaufen, eine Positionierung von Funktionselementen, wie beispielsweise einer Pipettenspitze, ermöglicht. Diese Platte kann in einem Verfahren verwendet werden, bei dem zur Bestimmung einer Position ein Objekt mittels eines Robotersystems in X-, Yoder Z-Richtung eines rechtwinkligen Koordinatensystems im Bereich der genannten Platte verfahren werden und synchron dazu die Abschattung der Abtaststrahlen beobachtet wird. Auf diese Weise ist eine Bestimmung der Position z.B. einer Pipettenspitze in Bezug zur Platte möglich.

Nachteilig bei diesem Verfahren ist, dass eine Positionsbestimmung relativ lange dauert. Eine Erhöhung der Präzision der Positionsbestimmung erfordert ein langsameres Verfahren. Weiter nachteilig ist, dass eine Synchronisation der Verfahrbewegung des Robotersystems mit der Auswertung von Signalen der Empfänger der Lichtschranken erforderlich ist. Weiterhin ist aus DE 10 2006 038161 A1 ein System zur Fluoreszenzbildgebung von Objekten mittels indirekter diffuser Beleuchtung und einer Bildaufnahme aus unterschiedlichen Blickrichtungen bekannt.

Die Aufgabe der vorliegenden Erfindung bestand darin, eine Vorrichtung und ein Verfahren zur Verfügung zu stellen, welche Nachteile des Stands der Technik überwinden. Insbesondere ist eine Aufgabe der vorliegenden Erfindung, die Positionsbestimmung in kürzerer Zeit durchführen zu können. Weiter ist eine Aufgabe der Erfindung, die Positionsbestimmung in allen drei Raumdimensionen präzise durchführen zu können.

Die Aufgabe wird erfindungsgemäss durch einen Positionsdetektor gemäss Anspruch 1 gelöst.

Der erfindungsgemässe Positionsdetektor dient zur Erzeugung von 3D-Positionsinformation eines Objekts in einem Positionsbestimmungsraum für das Objekt. Der Positionsdetektor umfasst:

- eine Kamera mit einem Objektiv und einem Bildsensor, welche einen Abbildungsbereich definieren, und
- im Abbildungsbereich angeordnet mindestens ein erstes Lichtumlenkelement.

Die Kamera und das mindestens eine Lichtumlenkelement sind dazu ausgelegt, auf dem Bildsensor gleichzeitig mindestens zwei Bilder des Positionsbestimmungsraums zu erzeugen und dabei ein erstes Bild durch am ersten Lichtumlenkelement P217163 (25.05.2021) umgelenkte Lichtstrahlen zu erzeugen, wobei sich die mindestens zwei Bilder bezüglich Betrachtungsrichtung des Positionsbestimmungsraums unterscheiden.

Die 3D-Positionsinformation des Objekts kann beispielsweise in einer Bildaufzeichnung enthalten sein, welche mittels des Bildsensors aufgezeichnet werden kann. Der Positionsbestimmungsraum ist so ausgestaltet, dass er das Objekt, dessen 3D-Position zu ermitteln ist, zumindest teilweise aufnehmen kann. Strahlengänge ausgehend vom Positionsbestimmungsraum werden durch den erfindungsgemässen Positionsdetektor auf mindestens zwei verschiedenen Wegen in reelle Bilder auf dem Bildsensor abgebildet. Diese beiden verschiedenen Wege entsprechen unterschiedlichen Betrachtungsrichtungen des Positionsbestimmungsraums. Die letzte Stufe der Abbildung erfolgt durch das Objektiv der Kamera. Dem Objektiv vorgelagert ist mindestens ein erstes Lichtumlenkelement. Der Positionsdetektor ist so ausgestaltet, dass dabei gleichzeitig mindestens zwei solche reellen Bilder auf dem Bildsensor entstehen. Zumindest eines der Bilder wird dabei über Lichtstrahlen erzeugt, welche am ersten Lichtumlenkelement umgelenkt werden. Das Lichtumlenkelement liegt im direkten Abbildungsbereich der Kamera. Das Lichtumlenkelement kann beispielsweise ein Spiegel oder ein Umlenkprisma sein. Das Lichtumlenkelement lenkt Lichtstrahlen auf definierte Art um und ist so ausgestaltet, dass das entlang dem optischen Pfad nachgelagerte Objektiv die umgelenkten Lichtstrahlen in ein reelles Bild abbilden kann. Das Lichtumlenkelement kann so gestaltet sein, dass es mit dem Objektiv der Kamera so zusammenwirkt, dass beispielsweise eine Vergrösserungswirkung erzielen kann. Das Lichtumlenkelement kann auch zum unverzerrten Abbilden ausgelegt sein. Erstes und zweites Bild können in unterschiedlichen Bereichen auf dem Bildsensor erzeugt werden. Die beiden Bilder können auch teilweise überlappen und beispielsweise anhand einer Farbe, eines Wellenlängenbereichs oder einer Polarisation unterscheidbar sein. Die Strahlengänge zum ersten und zweiten Bild können aus unterschiedlicher Richtung auf das Objektiv der Kamera auftreffen oder beispielsweise über ein halbverspiegeltes optisches Element vor der Kamera zusammengeführt werden.

Der Erfinder hat erkannt, dass mit dem vorgeschlagenen Positionsdetektor auf sehr einfache Art 3D-Positionsinformation eines Objekts ermittelt werden kann. Aufgrund der gleichzeitigen Erzeugung von zwei Bilder aus unterschiedlichen Betrachtungsrichtungen kann anders als in einem üblichen zweidimensionalen Bild auch Information über eine dritte Raumdimension ermittelt werden. Das Ermitteln von 3D-Positionsinformation kann in kurzer Zeit erfolgen.

Die vorliegende Erfindung ist auf eine Vielzahl von Situationen anwendbar, in denen die Position eines Referenzpunkts eines Objekts, insbesondere eines länglichen Objekts, in drei Koordinatenrichtung genau bekannt sein sollte. Einleitend wurde als konkretes Beispiel einer solchen Situation die Positionsbestimmung einer Pipettenspitze diskutiert. Ein Referenzpunkt eines Objekts, dessen Position mit Hilfe der vorliegenden Erfindung bestimmt werden kann, ist beispielsweise das Ende irgendeines länglichen Objekts. Dies kann ausser einer Pipettenspitze aber beispielsweise auch die Spitze eine Bohrers, die Mitte der Stirnfläche eines Fräsers, eine Tastspitze eines Formabtastgeräts, die Lötspitze eines Lötkolbens, etc. sein.

Der erfindungsgemässe Positionsdetektors umfasst weiter mindestens eine Lichtquelle, welche zur Beleuchtung des Positionsbestimmungsraums angeordnet ist.

Durch die Lichtquelle kann die Qualität der 3D-Postionsinformation erhöht werden, beispielsweise kann Bildrauschen in einer Bildaufzeichnung enthaltend die 3D-Positionsinformation verringert werden. Die Lichtquelle kann beispielsweise zum Beleuchten im Blitzmodus ausgelegt sein. Die Lichtquelle kann monochromatisches Licht oder Licht aus einem schmalen Wellenlängenband aussenden. Dies ermöglicht, störendes Licht aus anderen Quellen als aus der Lichtquelle vor oder in der Kamera gezielt auszufiltern.

Der erfindungsgemässe Positionsdetektors umfasst zusätzlich zu der mindestens einen Lichtquelle ein erstes Diffusor-Element zur diffusen Streuung von Licht, wobei das erste Diffusor-Element und das erste Lichtumlenkelement einander bezüglich des Positionsbestimmungsraums gegenüberliegend angeordnet sind, und wobei die mindestens eine Lichtquelle so angeordnet ist, dass sie den Positionsbestimmungsraum indirekt über das erste Diffusor-Element beleuchtet.

Dadurch entsteht im ersten Bild ein Schattenbild des Objekts, in dem die Umrisse Objekts besonders deutlich zu erkennen sind. Charakteristische Punkte eines Objekts, wie beispielsweise eine Spitze, können so besonders gut identifiziert werden. Weiter eignet sich diese Ausführungsform besonders gut zur Bestimmung einer 3D-Position eines Objekts mit spiegelnder Oberfläche oder eines zumindest teilweise durchsichtigen Objekts.

Ausführungsformen des Positionsdetektors ergeben sich aus den Merkmalen der Ansprüche 2 bis 11. Merkmale der abhängigen Ansprüche können beliebig kombiniert werden, soweit sie sich untereinander nicht widersprechen.

In einer Ausführungsform liegt der Positionsbestimmungsraum im Abbildungsbereich der Kamera.

In dieser Ausführungsraum kann eines der mindestens zwei Bilder über direkte Strahlengänge vom Positionsbestimmungsraum zum Objektiv der Kamera erzeugt werden. Diese Ausführungsform kann besonders einfach aufgebaut sein. Beispielsweise kann der Positionsbestimmungsraum zentral im Abbildungsbereich der Kameral liegen und es kann mit einem einzigen Lichtumlenkelement in einer Randzone des Abbildungsbereichs der Kamera die erste Betrachtungsrichtung auf den Positionsbestimmungsraum erhalten werden, die beispielsweise ungefähr senkrecht zur direkten Beobachtungsrichtung, d.h. in diesem Fall der zweiten Beobachtungsrichtung, auf den Positionsbestimmungsraum liegen kann.

In einer Ausführungsform des Positionsdetektors ist das erste Lichtumlenkelement dazu ausgelegt, Licht an einer ersten ebenen Fläche umzulenken, welche eine erste Ebene definiert.

Mit dieser Ausführungsform wird ein unverzerrtes erstes Bild erreicht. Die Auswertung der mit dem Positionsdetektor erzeugten 3D-Positionsinformation wird mit dieser Ausführungsform besonders einfach. Die erste ebene Fläche kann beispielsweise eine plane verspiegelte Fläche sein oder eine ebene Fläche eines optischen Prismas. Die erste Ebene ist eine gedachte Ebene, welche die erste ebene Fläche über deren Rand hinaus fortsetzt. Diese erste Ebene kann beispielsweise eine Normale haben, die einen bestimmten Winkel mit einer optischen Achse der Kamera bildet, beispielsweise einen Winkel im Bereich 20° bis 50°. Ein Winkel leicht über 45° ist geeignet, um zusammen mit einer direkten Blickrichtung auf den Positionsbestimmungsraum ein paar von orthogonalen Blickrichtungen zur Verfügung zu stellen. Kleine Neigungswinkel gegenüber der optischen Achse, z.B. im Bereich 0° bis 30°, in Kombination mit einer Position des ersten Lichtumlenkelements, welche weiter von der Kamera entfernt ist, als der Positionsbestimmungsraum, sind nützlich um eine Blickrichtung auf das Objekt zu ermöglichen, welche eine in direkter Sicht unsichtbare Seite des Objekts zeigt.

Eine Ausführungsform des Positionsdetektors umfasst weiter ein zweites Lichtumlenkelement. Die Kamera und das zweite Lichtumlenkelement sind dazu ausgelegt ein zweites Bild der mindestens zwei Bilder durch am zweiten Lichtumlenkelement umgelenkten Lichtstrahlen zu erzeugen.

In dieser Ausführungsform können das erste und das zweite Lichtumlenkelement so angeordnet werden, dass die Strahlengänge vom Objekt zum ersten und zum zweiten Bild im wesentlich gleich lang sind. Damit können beide Bilder auf dem Bildsensor gleichzeitig scharf gestellt werden. Diese Ausführungsform ist auch mit einer Ausführungsform kombinierbar, welche einen direkten Blick auf den Positionsbestimmungsraum ermöglicht und so ein drittes Bild des Positionsbestimmungsraums auf dem Bildsensor der Kamera ermöglicht.

In einer Ausführungsform des Positionsdetektors ist das zweite Lichtumlenkelement dazu ausgelegt Licht an einer zweiten ebenen Fläche umzulenken, welche eine zweite Ebene definiert.

Diese Ausführungsform hat den Vorteil, das erstes und zweites Bild unverzerrt sind, wie oben bereits für das erste Bild besprochen. Die zweite Ebene ist eine gedachte Ebene, welche die zweite ebene Fläche über deren Rand hinaus fortsetzt. Das zweite Lichtumlenkelement kann dieselben Merkmale aufweisen, wie für das erste Lichtumlenkelement oben besprochen.

In einer weiteren Ausführungsform des Positionsdetektors, welche eine Kombination von Merkmalen zweier oben genannter Ausführungsformen ist, sind sowohl das erste als auch das zweite Lichtumlenkelement dazu ausgelegt, Licht an einer ersten respektiven zweiten ebenen Fläche umzulenken, welche eine erste respektive zweite Ebene definiert.

Insbesondere kann es sich beim ersten und zweiten Lichtumlenkelement um zwei planare Spiegel handeln. Beispielsweise kann der erfindungsgemässe Positionsdetektor mit nur zwei Lichtumlenkelementen, insbesondere Spiegeln, gemäss dieser Ausführungsform umgesetzt werden, sodass ausserhalb der Kamera keine weiteren optischen Elemente benötigt werden als die beiden Lichtumlenkelemente.

In einer Ausführungsform des Positionsdetektors, bei der die erste und zweite Ebene wie oben definiert sind, schneiden sich die erste und die zweite Ebene in einer gedachten Geraden, welche senkrecht zu einer optischen Achse der Kamera steht.

In dieser Ausführungsform können die gedachte Gerade und die optische Achse eine Symmetrieebene der Vorrichtung definieren. Insbesondere kann eine solche Symmetrieebene durch den Positionsbestimmungsraum verlaufen. Erstes und zweites Bild werden so für Objekte auf der Symmetrieebene über gleichlange Strahlenpfade erzeugt. Erste und zweite ebene Fläche können sich bis nahe an die Symmetrieebene heran erstrecken. Diese Anordnung hat den Vorteil, dass der Abbildungsbereich der Kamera gut ausgenützt werden kann.

In einer weiteren Ausführungsform des Positionsdetektors definieren die erste und zweite Ebene vier Raumsegmente, wobei die Kamera und der Positionsbestimmungsraum in einem ersten Raumsegment dieser vier Raumsegmente angeordnet sind und wobei der Öffnungswinkel des ersten Raumsegments im Bereich von 100° bis 140° liegt.

Mit dieser Ausführungsform kann besonders gut auswertbare 3D-Positionsinformation erzeugt werden. Das liegt daran, dass mit dieser Ausführungsform weitgehend unabhängige Betrachtungsrichtungen des Positionsbestimmungsraums für das erste und zweite Bild erreicht werden können. Insbesondere kann der Öffnungswinkel des ersten Raumsegments im Bereich von 130.0° bis 135.0° liegen. Damit können die Beobachtungsrichtungen praktisch orthogonal zueinander liegen. Beispielsweise kann in einer Anordnung mit Spiegelsymmetrie die erste und zweite Ebene eine Normale besitzen, die je um ca. 23° gegenüber der optischen Achse der Kamera geneigt sind. In diesem Beispiel ist der Öffnungswinkel des Raumsegments 134° (= 180° - 2*(23°)). Im Grenzfall eines grossen Abstands zwischen Kamera und Spiegeln können mit Neigungswinkeln der Spiegel von je 22.5° (d.h. mit einem Öffnungswinkel des Raumsegments von 135°) orthogonale Beobachtungrichtungen erreicht werden.

In einer Ausführungsform des Positionsdetektors sind die Kamera, das erste Lichtumlenkelement und das zweite Lichtumlenkelement derart in Bezug zu einem zentralen Punkt im Positionsbestimmungsraum angeordnet, dass ein erster Strahlengang vom zentralen Punkt über das erste Lichtumlenkelement durch das Objektiv zum Bildsensor und ein zweiter Strahlengang vom zentralen Punkt über das zweite Lichtumlenkelement durch das Objektiv zum Bildsensor im zentralen Punkt orthogonal zueinander verlaufen.

Mit dieser Ausführungsform kann besonders gut auswertbare 3D-Positionsinformation erzeugt werden.

Insbesondere kann der Positionsdetektor in einer weiteren Ausführungsform weiter ein zweites Diffusor-Element umfassen, wobei auch das zweite Diffusor-Element und das zweite Lichtumlenkelement einander bezüglich des Positionsbestimmungsraums gegenüberliegend angeordnet sind und wobei die mindestens eine Lichtquelle so angeordnet ist, dass sie den Positionsbestimmungsraum indirekt über das zweite Diffusor-Element beleuchtet. Auf diese Weise werden zwei gleichartige Schattenbilder aus zwei verschiedenen Betrachtungsrichtungen erzeugt. Es kann auch eine zweite Lichtquelle spezifisch zur Beleuchtung des zweiten Diffusor-Elements angeordnet sein. In diesem Fall können sich erste und zweite Lichtquelle beispielsweise in der Farbe oder der Wellenlänge des ausgesendeten Lichts unterscheiden, was eine Unterscheidung zweier Schattenbilder auf dem Bildsensor selbst dann ermöglicht, wenn sich die Bilder überlappen. Beispielsweise kann mit entsprechenden Lichtquellen ein erstes Schattenbild des Objekts vor rotem Hintergrund und ein zweites Schattenbild des Objekts aus einer anderen Blickrichtung und vor grünem Hintergrund gleichzeitig auf dem Bildsensor erzeugt werden.

Eine Ausführungsform des Positionsdetektors umfasst ein Gehäuse, welches die Kamera, das erste Lichtumlenkelement, den Positionsbestimmungsraum und gegebenenfalls das zweite Lichtumlenkelement umgibt und wobei das Gehäuse eine Zugangsöffnung zum Einführen zumindest eines Endes des Objekts in den Positionsbestimmungsraum aufweist.

Diese Ausführungsform erzeugt 3D-Positionsinformation von besonders hoher Qualität. In dieser Ausführungsform werden Störungen durch Streulicht oder im Abbildungsbereich der Kamera liegende Gegenstände, welche nicht zum Objekt gehören, zu dem 3D-Positionsinformation erhoben werden soll, weitgehend eliminiert. Gleichzeitig ist ein Austausch von Objekten, deren Position bestimmt werden soll, auf einfache Art durch die Zugangsöffnung hindurch möglich.

Die Kamera des Positionsdetektors hat beispielsweise ein Objektiv mit einer Brennweite im Bereich 50 mm bis 200 mm, insbesondere kann das Objektiv die Charakteristika eines Teleobjektivs haben.

Der Erfinder hat erkannt, dass in dieser Ausführungsform die 3D-Positionsinformation von besonders hoher Präzision ermittelt werden kann. Mit einer Brennweite im genannten Bereich ist die Verzeichnung des Bildes sehr gering und es kann eine grosse Schärfentiefe erreicht werden.

Im Rahmen der Erfindung liegt auch ein Robotersystem gemäss Anspruch 12. Das erfindungsgemässe Robotersystem umfasst einen erfindungsgemässen Positionsdetektor. Es kann sich beim Robotersystem insbesondere um ein Pipettierrobotersystem handeln.

Weiter wird die Aufgabe durch ein Verfahren gemäss Anspruch 13 gelöst.

Beim erfindungsgemässen Verfahren handelt es sich um ein Verfahren zur Bestimmung räumlicher Koordinaten eines Objekts. Das Verfahren umfasst die Schritte:

    a) Positionieren zumindest eines Teils eines Objekts bezüglich einer Kamera;
    b) Erzeugen mindestens zweier Bilder des Objekts auf dem Bildsensor der Kamera, wobei mindestens eines der Bilder durch eine Spiegelung des Objekts erzeugt ist und wobei die mindestens zwei Bilder das Objekt aus unterschiedlichen Betrachtungsrichtungen wiedergeben; und
    c) Bestimmen der räumlichen Koordinaten des Objekts aus den mindestens zwei Bildern.

Mit dem erfindungsgemässen Verfahren können die räumlichen Koordinaten des Objekts sehr schnell bestimmt werden.

Eine Variante des Verfahrens dient zur Bestimmung räumlicher Koordinaten eines Objekts im

Positionsbestimmungsraum eines erfindungsgemässen Positionsdetektors.

Dabei umfasst das Verfahren die Schritte:

    a) Positionieren zumindest eines Teils des Objekts im Positionsbestimmungsraum;

    b) Erzeugen einer Bildaufnahme mittels der Kamera, wobei die Bildaufnahme das erste und das zweite Bild enthält und wobei das erste Bild mittels am ersten Lichtumlenkelement umgelenkten Strahlengängen erzeugt wird;

    c1) in der im Schritt b) erzeugten Bildaufnahme, Auswerten des ersten Bildes, wobei eine erste Horizontal-Vertikal-Position des Objekts innerhalb des Bildes bestimmt wird;

    c2) in der im Schritt b) erzeugten Bildaufnahme, Auswerten des zweiten Bildes, wobei eine zweite Horizontal-Vertikal-Position des Objekts innerhalb des Bildes bestimmt wird;

    c3) Berechnen der räumlichen Koordinaten des Objekts in Funktion der ersten und zweiten Horizontal-Vertikal-Position.

Als Basis für die Berechnung im Schritt c3) kann beispielsweise vorab eine Kalibrations-Prozedur durchgeführt werden, bei der ein Objekt um bekannte Koordinatenwerte in drei unabhängige Raumrichtungen verschoben wird und je die Schritte a), b), c1), c2) und c3) durchgeführt werden. Aus dem Zusammenhang zwischen den ermittelten Positionen in der Bildaufnahme und den bekannten Koordinatenänderungen lässt sich ein lineares Gleichungssystem für die Umrechnungs-Koeffizienten zwischen Horizontal-Vertikal-Position in den beiden Bildern und räumlichen Koordinaten aufstellen und lösen. Eine derartige Kalibrations-Prozedur kann beispielsweise auf einem Präzisionskreuztisch durchgeführt werden, beispielsweise auf einer CNC-Maschine mit einer Positionsauflösung von 10 um oder besser.

Der Erfinder hat erkannt, dass die Verwendung von 3D-Positionsinformation aus einer Bildaufnahme mit dem erfindungsgemässen Positionsdetektors zu besonders präzisen und reproduzierbaren räumlichen Koordinaten führt.

In einer Variante des Verfahrens erfolgt im Schritt c3) das Berechnen der räumlichen Koordinaten des Objekts in Funktion des Mittelwerts der ersten und zweiten Horizontal-Vertikal-Position und des Abstands der ersten und zweiten Horizontal-Vertikal-Position.

In dieser Variante des Verfahrens kann eine erste Koordinate aus dem Mittelwert der beiden Vertikal-Positionen ermittelt werden. Eine zweite Koordinate kann aus dem Mittelwert der beiden Horizontal-Positionen ermittelt werden. Eine dritte Koordinate kann aus dem Abstand der der ersten und zweiten Horizontal-Vertikal-Position ermittelt werden. Diese Koordinaten ist unabhängig von der ersten und zweiten Koordinate und sorgt dafür, dass die Kombination aller drei Koordinaten räumliche Koordinaten ergibt.

Weiter im Rahmen der Erfindung liegt ein Verfahren zum Betrieb eines erfindungsgemässen Robotersystems. Das Verfahren umfasst die Schritte:

- Durchführen der Schritte des erfindungsgemässen Verfahrens zur Bestimmung einer ersten räumlichen Koordinate eines Referenzpunktes eines ersten Objekts, während das erste Objekt vom Robotersystem im Positionsbestimmungsraum gehalten wird;

- Festlegen eines ersten Parametersatzes eines ersten Bewegungsablaufs des Robotersystems, mittels dessen das Robotersystem den Referenzpunkt des ersten Objekts vom Positionsbestimmungsraum an eine Zielposition bringt;

- Durchführen der Schritte des erfindungsgemässen Verfahrens zur Bestimmung einer zweiten räumlichen Koordinate eines Referenzpunktes eines zweiten Objekts, während das zweite Objekt vom Robotersystem im Positionsbestimmungsraum gehalten wird;

- Korrigieren des ersten Parametersatzes des ersten Bewegungsablaufs in Funktion einer Differenz zwischen erster und zweiter räumlicher Koordinate zum Erhalt eines zweiten Parametersatzes für einen zweiten Bewegungsablauf des Robotersystems;

- Durchführen des zweiten Bewegungsablaufs basierend auf dem zweiten Parametersatz mit dem zweiten Objekt.

Die Durchführung des Verfahrens zur Bestimmung der ersten räumlichen Koordinate des Referenzpunktes des ersten Objekts kann vor oder nach dem Festlegen des ersten Parametersatzes des ersten Bewegungsablaufs erfolgen. In der Kombination der beiden Schritte wird ein Bezugspunkt, eine Art virtueller Nullpunkt, im Positionsbestimmungsraum festgelegt, von dem aus der erste Bewegungsablauf genau an die gewünschte Zielposition führt. Weitere Bewegungsabläufe können bezüglich der Abweichung des entsprechenden Referenzpunkts des zweiten Objekts und weiterer Objekte vom vorher festgelegten Bezugspunkt so korrigiert werden, dass der entsprechende Referenzpunkt der weiteren Objekte ebenfalls an die Zielposition geführt wird. Variationen in der genauen Lage des Referenzpunkts, bei dem es sich beispielsweise um die Spitze einer Pipette handeln kann, können so ausgeglichen werden. Solche Variationen können beispielsweise durch individuelle geometrische Abweichungen der Objekte, beispielsweise von Pipetten, zustande kommen. Beispielsweise sind leichte Krümmungen langer Hohlnadeln kaum zu vermeiden, was zu Abweichungen zwischen der Position der Aufnahme der Nadel und der Spitze der Nadel in der Ebene senkrecht zur Nadelachse führt. Variationen können auch durch nicht immer ganz perfekte Wiederholbarkeit der Aufnahme des Objekts durch das Robotersystem entstehen. Beispielsweise das wiederholte Aufstecken einer Pipette auf die entsprechende Aufnahme führt auch bei identischer Pipette zu leichten Variationen der räumlichen Position der Pipettenspitze gegenüber der Aufnahme. Alle diese Variationen gleicht das erfindungsgemässe Verfahren unabhängig von der genauen Ursache aus.

Die Erfindung ist weiter auf Anwendungen des erfindungsgemässen Verfahrens zum Betrieb eines Robotersystems gerichtet.

In einer Anwendung des Verfahrens ist das Robotersystem ein Pipettierrobotersystem und das erste Objekt ist eine Pipettenspitze und das zweite Objekt ist eine Pipettenspitze.

Mit dieser Anwendung wird unabhängig von Produktionstoleranzen von Pipettenspitzen eine grosse Präzision beim Anfahren von Wells erreicht. Damit kann beispielsweise eine preisgünstigere Version von Pipetten zusammen mit Wellplatten mit geringem Lochabstand, beispielsweise Standard-Wellplatten mit 96 Wells, mit 384 Wells oder mit 1536 Wells verwendet werden, ohne dass das Risiko von Fehlpipettierungen steigt.

Das erste Objekt kann beispielsweise eine erste Pipettenspitze sein und das zweite Objekt kann eine zweite Pipettenspitze sein, die von der ersten Pipettenspitze verschieden ist. Das zweite Objekt kann beispielsweise auch die erste Pipettenspitze sein, aber nachdem die erste Pipettenspitze beispielsweise zum Durchstossen eines Deckels eines Behälters verwendet wurde. Beispielsweise Pipettenspitzen in Form langer metallischer Kanülen können für das Durchstossen eines Deckels verwendet werden. Dabei wird möglicherweise die Geometrie und damit die Lage der der Pipettenspitze geringfügig verändert. In diesem Sinn handelt es sich bei der Pipettenspitze vor und nach einem Durchstossvorgang um ein erstes und um ein zweites Objekt, deren 3D-Positionen gemäss erfindungsgemässen Verfahren separat bestimmt werden können.

Der Pipettierroboter kann beispielsweise Anordnungen von mehreren Pipetten, beispielsweise von 4 oder 8 Pipetten in einer Reihe, gemeinsam bewegen. In diesem Fall kann beispielsweise für jede einzelne der mehreren Pipetten im Positionsdetektor eine individuelle Abweichung von ihrer Sollposition bestimmt werden. Beispielsweise kann dann die gesamte Anordnung der mehreren Pipetten gemeinsam an eine Grobposition gefahren werden und es kann dann, beispielsweise, das Dispensieren aus jeder einzelnen Pipette separat erfolgen, wobei unmittelbar vor dem Dispensieren eine individuelle Mikrokorrektur der Position basierend auf den im Positionsdetektor ermittelten Offsets erfolgen kann.

In einer Variante der Anwendung liegt die Zielposition über einer MALDI-Zielplatte, d.h. einer Zielplatte für Matrix-Assistierte-LASER-Desorption-Ionisierung.

In dieser Variante der Anwendung kann ein Analyt in Lösung sehr zielgenau auf diejenige Stelle der Zielplatte pipettiert werden, welche im nachfolgenden Schritt von einem LASER-Strahl getroffen wird. Damit sofort ein Puls mit Analyt-Molekülen erzeugt, ohne dass ein vorgängiges aufwändiges Suchen der Stelle auf der Zielplatte mit höchster Analyt-Konzentration notwendig ist. Diese Variante der Anwendung eignet sich insbesondere als Vorbereitungsschritt für Massenspektrometrie mit Flugzeitanalyse (engl. time of flight, abgekürzt TOF) basierend auf Matrix-Assistierter-Laser-Desorption-Ionisierung (MALDI-TOF).

Eine Transportvorrichtung mit Träger für die MALDI-Zielplatte wird beispielsweise auf derselben Plattform befestigt, auf welcher der Positionsdetektor angebracht ist. Die Transportvorrichtung dient dazu, die Zielplatte von einer Pipettierposition ins MALDI-TOF-Massenspektrometer zu transportieren. Auf diese Weise kann eine besonders hohe Reproduzierbarkeit beim Treffen der Stelle, welche vom LASER-Strahl des MALDI-TOF-Massenspektrometers getroffen wird, erreicht werden.

Ein möglicher Ablauf umfasst folgende Schritte:

- Eine Pipettenspitze aufnehmen.

- Die erste Pipettenspitze im Positionsbestimmungsraum des Positionsdetektors einfahren und erste räumliche Koordinaten der Pipettenspitze gemäss erfindungsgemässem Verfahren ein erstes Mal bestimmen. Diese definiert eine Referenzpunkt für später verwendete Pipettenspitzen.

- Mit der Pipettenspitze die genaue gewünschte DispensierPosition über der MALDI-Zielplatte anfahren. Die MALDI-Zielplatte befindet sich dabei in der Pipettierposition. Anfahren einer Grob-Position kann beispielsweise vorab auf einem programmierten Weg erfolgen. Das Anfahren der genauen Position kann beispielsweise durch einen Benutzer unter Verwendung von Pfeiltasten in einem sogenannten Teach-Modus der Robotersteuerung gesteuert werden. Die genaue Zielposition kann beispielsweise durch auf der Zielplatte aufgedruckte Ringe für den Benutzer erkennbar sein, wobei das Zentrum eines Rings der Zielposition entspricht.

- Zielkoordinaten als Koordinaten des Robotersystems abspeichern. Damit ist die Distanz in allen Raumkoordinaten zwischen dem Referenzpunkt im Positionsdetektor und den Zielkoordinaten bekannt.

- Aufnehmen einer zweiten Pipettenspitze.

- Zweite Pipettenspitze im Positionsbestimmungsraum des Positionsdetektors einfahren und zweite räumliche Koordinaten der Pipettenspitze gemäss erfindungsgemässem Verfahren bestimmen. Daraus ergibt sich eine Differenz der Position der zweiten Pipettenspitze zum vorher ermittelten Referenzpunkt.

- Anfahren von Zielkoordinaten über der MALDI-Zielplatte, wobei sowohl die Distanz zwischen dem Referenzpunkt im Positionsdetektor und den Zielkoordinaten berücksichtigt wird, als auch die ermittelte Differenz der Position der zweiten Pipettenspitze zum vorher ermittelten Referenzpunkt berücksichtigt wird.

In gleicher Art können mehrere Zielkoordinaten bestimmt werden, beispielsweise zusätzlich zur Dispensierposition über einer MALDI-Zielplatte auch die Koordinaten eines bestimmten Wells auf einer Mikroplatte, an dem beispielsweise ein Analyt durch Aspirieren aufgenommen werden soll. Die abgespeicherte Verschiebung kann dann bei einem effektiven Pipettiervorgang berücksichtigt werden, in dem sie beim Festlegen der Steuerbefehle für einen Weg von einem Well, an dem ein Analyt aufgenommen wird, zur gewünschten Dispensier-Position über der MALDI-Zielplatte berücksichtigt wird.

In einer weiteren Variante der Anwendung ist die Zielposition auf einer Kultivierungs-Platte definiert und der zweite Parametersatz des zweiten Bewegungsablaufs wird weiter basierend auf den Koordinaten einer Bakterienkolonie auf der Kultivierungs-Platte angepasst.

Durch Variante der Anwendung wird es möglich, zielgenau in einem Mikroskop-Bild definierte Stellen einer Bakterienkolonie mittels einer Pipettenspitze auszustanzen und einer weiteren Analyse zuzuführen. Produktionstoleranzen der Pipettenspitzen haben auf diese Weise kaum mehr Einfluss auf die Positioniergenauigkeit beim Ausstanzen der Probe aus der Kultivierungsplatte.

Noch weiter im Rahmen der Erfindung liegt ein System zur Bestimmung von räumlichen Koordinaten eines Objekts in einem Positionsbestimmungsraum, wobei das System einen erfindungsgemässen Positionsdetektor und weiter eine Auswerteeinheit umfasst. Dabei sind der Bildsensor und die Auswerteeinheit zur Übertragung von Bilddaten wirkverbunden. Weiter ist das System dazu eingerichtet, das erfindungsgemässe Verfahren zur Bestimmung räumlicher Koordinaten eines Objekts durchzuführen. Die Auswerteeinheit kann beispielsweise durch den Steuerrechner eines Robotersystems gebildet sein. Die Auswerteeinheit kann auch räumlich entfernt vom Positionsdetektor angeordnet sein. Bilddaten können beispielsweise über ein drahtgebundenes oder drahtloses Computernetzwerk übertragen werden.

Ausführungsbeispiele der vorliegenden Erfindung werden nachstehend anhand von Figuren noch näher erläutert. Es zeigen

Fig. 1 einen schematischen Querschnitt durch einen nicht erfindungsgemässen Positionsdetektor;
Fig. 2 einen schematischen Querschnitt durch einen nicht erfindungsgemässen Positionsdetektor;

Fig. 3 einen schematischen Querschnitt durch eine Ausführungsform des erfindungsgemäßen Positionsdetektors;

Fig. 4 eine schematische Darstellung eines Systems zur Bestimmung von räumlichen Koordinaten eines Objekts;

Fig. 5 ein Flussdiagramm zu einer Variante des Verfahrens zur Bestimmung räumlicher Koordinaten eines Objekts;

Fig. 6 in Fig. 6.a) bis 6.c) Bildaufnahmen einer Pipettenspitze in verschiedenen Positionen im Positionsbestimmungsraum eines Positionsdetektors und korrespondierend in Fig. 6.d) bis 6.f) schematische Querschnitte zur Illustration der jeweiligen Positionen der Pipettenspitze;

Fig. 7 eine perspektivische Ansicht einer Ausführungsform des Positionsdetektors;

Fig. 8 ein erfindungsgemässes Robotersystem mit Positionsdetektor;

Fig. 9 eine perspektivische Ansicht der Ausführungsform gemäss Fig. 7 mit Einblick ins Gehäuse;

Fig. 10 einen Querschnitt durch die Ausführungsform gemäss Fig. 9.

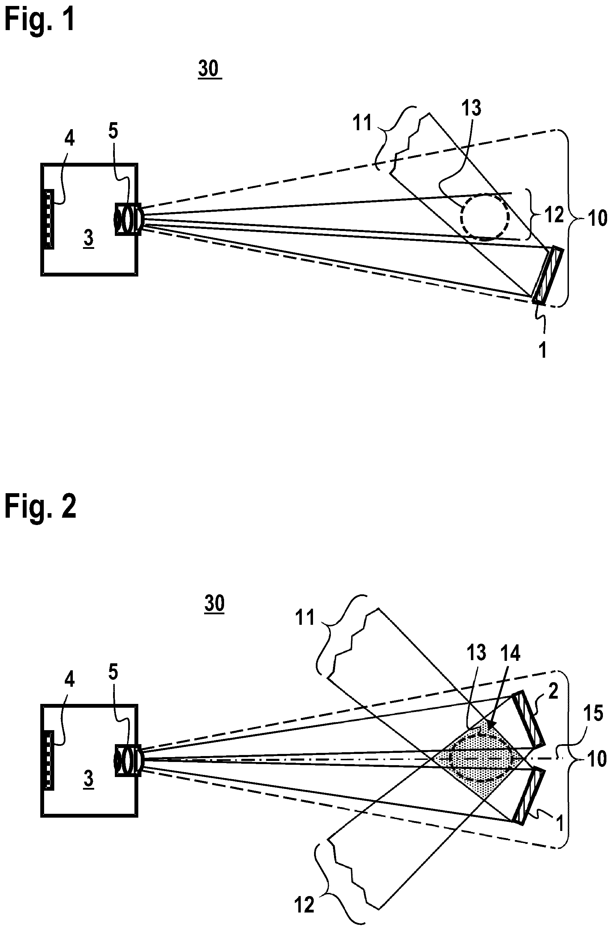

Figur 1 zeigt einen schematischen Querschnitt durch einen Positionsdetektor 30. Eine Kamera 3 mit einem Bildsensor 4 und einem Objektiv 5 definiert einen Abbildungsbereich 10 vor der Kamera. Ein erstes Lichtumlenkelement 1, hier als Spiegel dargestellt, befindet sich im Abbildungsbereich 10, welcher durch die Kamera direkt abgebildet werden kann. Das erste Lichtumlenkelement 1 definiert einen ersten indirekten Sichtbereich 11 auf den Positionsbestimmungsraum 13, in dem die Position eines Objekts bestimmt werden kann. Von der Kamera aus existiert ein zweiter Sichtbereich 12 auf den Positionsbestimmungsraum 13. Hier dargestellt ist eine direkte Sicht auf den Positionsbestimmungsraum 13. Der erste Sichtbereich 11 und der zweite Sichtbereich 12 unterscheiden sich in ihrer Betrachtungsrichtung des Positionsbestimmungsraums. In dieser Anordnung von Kamera 3 und Lichtumlenkelement 1 kann aus erstem 11 und zweitem 12 Sichtbereich gleichzeitig je ein erstes und zweites Bild des Positionsbestimmungsraums auf dem Bildsensor 4 erzeugt werden.

In Figur 2 ist eine Ausführungsform des Positionsdetektors 30 gezeigt. In dieser Ausführungsform sind eine erstes 1 und ein zweites 2 Lichtumlenkelement im Abbildungsbereich 10 der Kamera 3 angeordnet. Sowohl ein erster Sichtbereich 11 als auch ein zweiter Sichtbereich 12 werden durch umgelenkte Lichtstrahlen definiert. Die beiden Sichtbereiche überlappen in einem Überlappungsbereich 14, welche den Positionsbestimmungsraum 13 enthält. Die Kamera 3 definiert eine optische Achse 15. In der gezeigten Anordnung sind Lichtumlenkelemente 1, 2 und Sichtbereiche 11, 12 symmetrisch zur optischen Achse angeordnet.

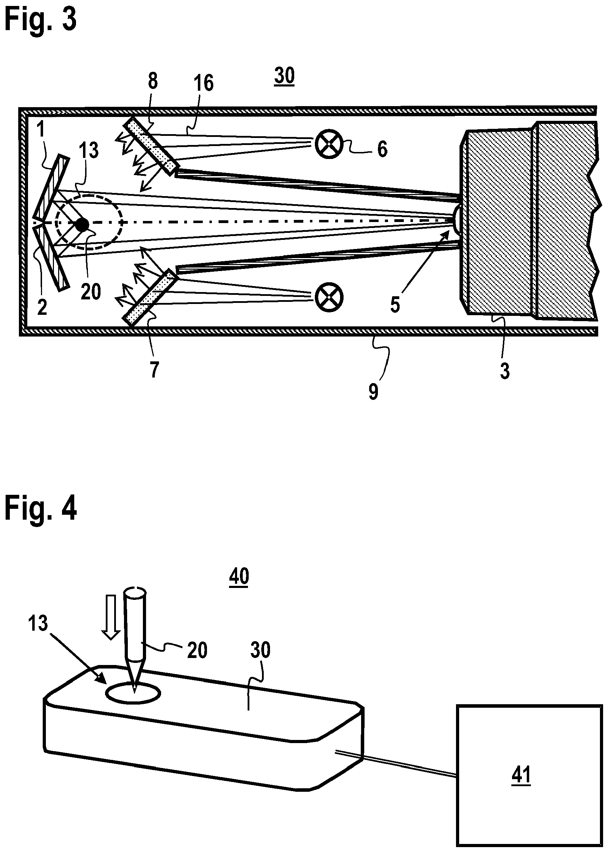

In Figur 3 ist als schematischer Querschnitt eine Ausführungsform des erfindungsgemässen Positionsdetektors 30 gezeigt, der weiter ein Gehäuse 9 umfasst, welcher eine Kamera 3, ein erstes Lichtumlenkelement 1, ein zweites Lichtumlenkelement 2 und den Positionsbestimmungsraum 13 umgibt. Das Gehäuse 9 kann lichtdichte Wände aufweisen. Weiter ist in der dargestellten ein Objekt 20 im Positionsbestimmungsraum vorhanden. Vom Objekt ausgehende Lichtstrahlen, welche am ersten resp. zweiten Lichtumlenkelement umgelenkt werden und ins Objektiv 5 der Kamera gelangen sind mit dünnen Linien angedeutet. Weiter sind in dieser Ausführungsform Lichtquellen 6, 6' angeordnet. Ein erstes Diffusor-Element 7 ist bezüglich des Positionsbestimmungsraums 13 dem ersten Lichtumlenkelement 1 gegenüber angeordnet. Licht aus einer Lichtquelle wird durch das Diffusor-Element, bei dem es sich beispielsweise um eine Glasscheibe mit rauer Oberfläche oder um einen porösen Kunststoffblock handeln kann, diffus gestreut. Das Objekt 20 wird so als eine Art Schattenbild auf den Bildsensor der Kamera abgebildet. Symmetrisch ist ein zweites Diffusor-Element 8 vorhanden, welches die korrespondierende Rolle für das zweite Lichtumlenkelement spielt. Blenden schirmen das Kameraobjektiv vor direktem Licht aus den Lichtquellen resp. den Diffusor-Elementen ab. Die gesamte Anordnung ist im Wesentlichen symmetrisch zur strichpunktiert eingezeichneten optischen Achse der Kamera aufgebaut.

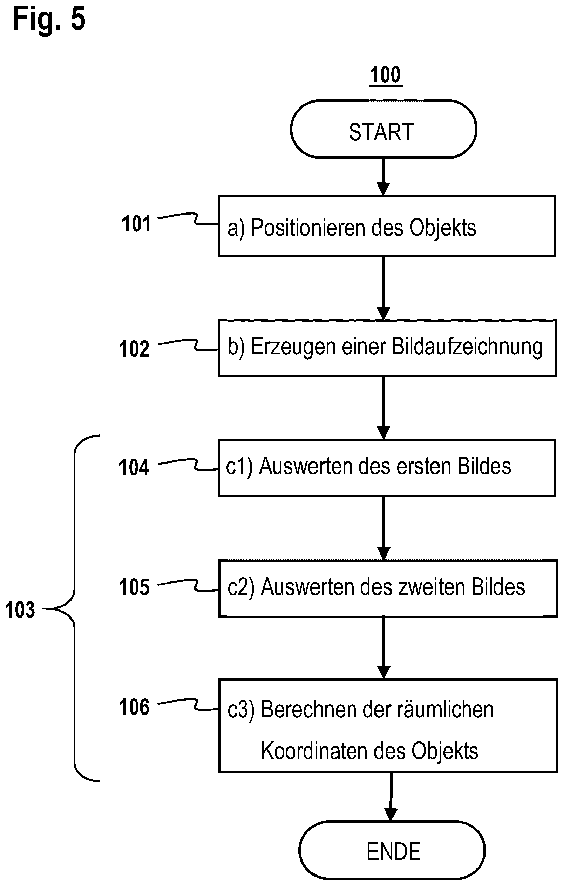

Figur 4 zeigt eine schematische Darstellung eines Systems 40 zur Bestimmung von räumlichen Koordinaten eines Objekts 20. Das System 40 umfasst einen Positionsdetektor 30 und eine Auswerteeinheit 41. Als Doppellinie symbolisch dargestellt ist eine Wirkverbindung zur Übertragung von Bilddaten vom Positionsdetektor zur Auswerteeinheit. Die Übertragung von Bilddaten kann beispielsweise über ein Kabel für eine serielle oder parallele Schnittstelle, beispielsweise über ein USB-Kabel erfolgen. Die Wirkverbindung zur Übertragung von Bilddaten kann beispielsweise auch eine drahtlose Verbindung sein, z.B. eine WiFi-Verbindung. Der Positionsdetektor weist in der gezeigten Darstellung eine Zugangsöffnung zu einem Positionsbestimmungsraum 13 auf, in den das Objekt 20 zumindest teilweise eingeführt werden kann. Das System ist dazu eingerichtet, das erfindungsgemässe Verfahren, beispielsweise gemäss dem Flussdiagramm nach Fig. 5, durchzuführen. Die Auswerteeinheit enthält beispielsweise ein Mikroprozessor und einen Arbeitsspeicher, in den Software zur Ausführung des Verfahrens geladen ist. Die Auswerteeinheit kann auch direkt in der Kamera eingebaut sein. In diesem Fall besteht die Möglichkeit, dass die Kamera nur bereits interpretierte Daten an einen Steuercomputer eines Gesamtsystems weitergibt, in welches der Positionsdetektor eingebaut sein kann. Ein solches Gesamtsystem kann beispielsweise ein Robotersystem, insbesondere ein Pipettierrobotersystem sein.

In Figur 5 ist ein Flussdiagramm des erfindungsgemässen Verfahrens 100 zur Bestimmung räumlicher Koordinaten eines Objekts gezeigt. Das Verfahren umfasst die Schritte

a) Positionieren (101) zumindest eines Teils eines Objekts bezüglich einer Kamera;

b) Erzeugen (102) mindestens zweier Bilder des Objekts auf dem Bildsensor einer Kamera, wobei mindestens eines der Bilder durch eine Spiegelung des Objekts erzeugt ist und wobei die mindestens zwei Bilder das Objekt aus unterschiedlichen Betrachtungsrichtungen wiedergeben; und

c) Bestimmen (103) der räumlichen Koordinaten des Objekts aus den mindestens zwei Bildern. In einer Ausführungsform umfasst der Schritt 103 die Teilschritte

c1) Auswerten (104) des ersten Bildes aus in der im Schritt b) erzeugten Bildaufnahme, wobei eine erste Horizontal-Vertikal-Position (H1,V1) des Objekts innerhalb des Bildes bestimmt wird;

c2) Auswerten (105) des zweiten Bildes aus in der im Schritt b) erzeugten Bildaufnahme, wobei eine zweite Horizontal-Vertikal-Position (H2,V2) des Objekts innerhalb des Bildes bestimmt wird;

c3) Berechnen (106) der räumlichen Koordinaten des Objekts in Funktion der ersten und zweiten Horizontal-Vertikal-Position.

Der letzte Schritt der Berechnung kann im Fall von kartesischen Koordinaten x, y, z dargestellt werden als

$$x = Fx \ (H1, \ H2, \ V1, \ V2),$$

$$y = Fy \ (H1, \ H2, \ V1, \ V2),$$

$$z = Fz \ (H1, \ H2, \ V1, \ V2).$$

Die mathematische Funktionen Fx, Fy, Fz hängen von Abbildungseigenschaften der Kamera sowie von der gegenseitigen Anordnung der Kamera und der Lichtumlenkelemente ab. In einer Anordnung in der die x-Achse parallel zur Horizontal-Achse des Bildsensors, die z-Achse parallel zur Vertikal-Achse des Bildsensors und die y-Achse parallel zur optischen Achse der Kamera ausgerichtet ist, können die Koordinaten beispielsweise approximativ wie folgt berechnet werden:

$$x = a_x(H1+H2)/2,$$

$$y = b(H1-H2) \quad ,$$

$$z = a_z(V1+V2)/2 \quad .$$

Dabei sind $a_x$, $a_z$ und b Koeffizienten, welche die Umrechnung der verwendeten Einheiten (beispielsweise Millimeter pro Pixel) und den Abbildungsmassstab berücksichtigen. In einfachen Fällen ist der Abbildungsmassstab in horizontaler und vertikaler Richtung identisch und es gilt $a_x = a_z = a$. Weitere Terme können einen Koordinatennullpunkt korrigieren oder mit Abstand des Objekts von der Kamera variierenden Abbildungsmassstab berücksichtigen. Eine anschliessende rechnerische Rotation der Koordinatenachsen oder eine Umwandlung der Koordinaten in Koordinaten beispielsweise eines Zylinderkoordinatensystems oder eines Kugelkoordinatensystems ist ebenfalls möglich.

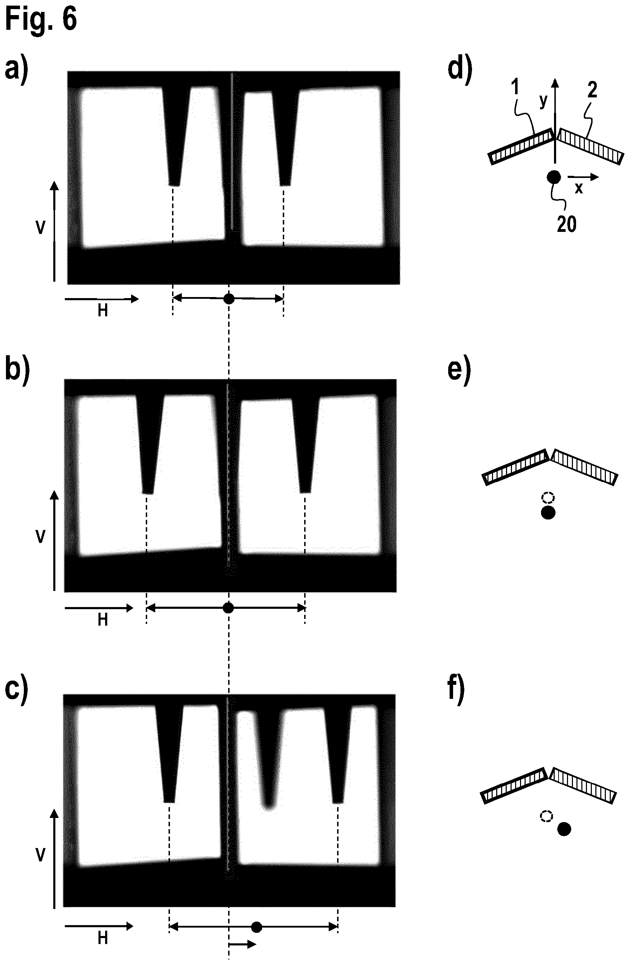

Figur 6 zeigt in Fig. 6.a) bis 6.c) Bildaufnahmen einer Pipettenspitze in verschiedenen Positionen im Positionsbestimmungsraum eines Positionsdetektors. In Fig. 6.d) bis 6.f) wird jeweils ein schematischer Querschnitt zur Illustration der jeweiligen Positionen der Pipettenspitze auf dem Bild gemäss der rechts benachbarten Figur, d.h. Fig. 6.d) zeigt die Position zum Bild in Fig. 6.a) usw.

In den Bildaufnahmen gemäss Fig. 6.a) bis 6.c) sind in der linken und rechten Bildhälfte jeweils in Weiss ein je über ein Diffusor-Element beleuchtetes erstes und zweites Lichtumlenkelement, hier je ein planarer Spiegel, erkennbar. Als mit scharfen Kanten abgebildetes Schattenbild in Schwarz zeichnet sich eine Pipettenspitze ab, die in den beiden Bildhälften je unter einer anderen Blickrichtung zu sehen ist. Dabei handelt es sich um ein erstes und zweites Bild, das jeweils über umgelenkte Lichtstrahlen erzeugt ist. Ein drittes unscharfes Bild der Pipettenspitze ist in Fig. 6.a) und 6.b) im Bereich der dunklen Zone in der Mitte der Bildaufnahme und in Fig. 6.c) nach rechts versetzt erkennbar. Dabei handelt es sich um die direkt abgebildete Pipettenspitze, welche nicht scharf abgebildet wird, da das Objektiv der Kamera auf die Distanz fokussiert ist, welche dem Abstand zum virtuellen Bild in den Spiegeln entspricht. Am Rand der Fig. 6.a) eingezeichnet sind Horizontalrichtung H und Vertikalrichtung V der Bildaufnahme, welche auch für die beiden anderen Bildaufnahmen gelten. In allen drei Figuren Fig. 6.a) bis 6.c) sind durch gestrichelte senkrechte Linien die Horizontalpositionen der Pipettenspitze im ersten und im zweiten Bild markiert. Am unteren Bildrand ist jeweils ein Mittelpunkt der beiden Horizontalpositionen durch einen schwarzen gefüllten Kreis eingezeichnet. Weiter ist der Abstand zwischen den beiden Horizontalpositionen durch einen Doppelpfeil eingezeichnet. Fig. 6.a) und Fig. 6.d) zeigen die Pipettenspitze in einer Referenzposition. Fig. 6.b) und 6.e) zeigen die Pipettenspitze, nachdem sie gegenüber der Referenzposition weg in Richtung der Kamera verschoben wurde; die Referenzposition ist in Fig. 6.e) durch einen gestrichelten Kreis eingezeichnet. Die in den beiden Bildern sichtbaren Pipettenspitzen haben nun einen grösseren Abstand bezüglich ihrer Horizontalpositionen. Dieser Abstand enthält die Information über die dritte Raumdimension, welche dem Abstand von der Kamera entspricht und im Koordinatensystem gemäss Fig. 6.d) der y-Richtung entspricht. Fig. 6.c) und 6.f) zeigen die Pipettenspitze nach einer weiteren Verschiebung nach rechts, resp. in x-Richtung. Diese Verschiebung zeigt sich in einer Verschiebung des Mittelpunkts der Horizontalpositionen der Pipettenspitze nach rechts, wie mit dem einfachen Pfeil am unteren Rand von Fig. 6.c) angedeutet. Auch das unscharfe direkte Bild der Pipettenspitze ist nach rechts gewandert. Eine dritte Koordinatenrichtung, die z-Richtung, bildet zusammen mit der x- und der y-Richtung ein rechtshändiges kartesisches Koordinatensystem. Die z-Richtung ist in der hier gezeigten Anordnung parallel zur Vertikalrichtung des Bildsensors ausgerichtet und ist direkt aus der V-Position in der Bildaufnahme ablesbar. In der hier gezeigten Sequenz von Bildaufnahmen wurde die z-Position der Pipettenspitze nicht verändert. Sie liegt in allen Bildaufnahmen ca. in der halben Höhe bezüglich Vertikalrichtung V.

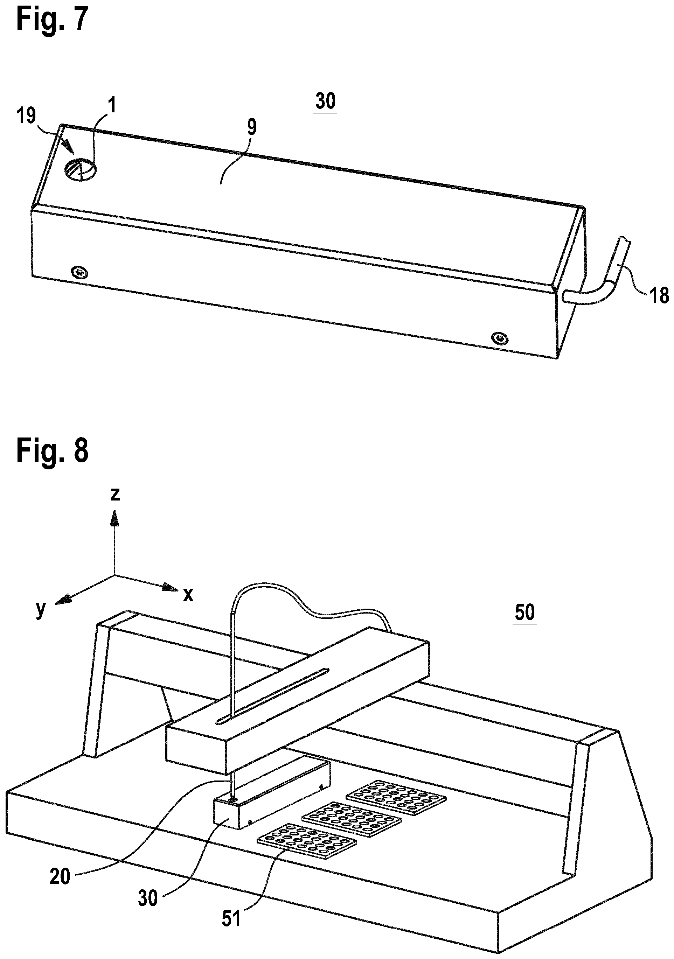

In Figur 7 ist eine perspektivische Ansicht einer Ausführungsform eines Positionsdetektors 30 gezeigt. Der Positionsdetektor 30 umfasst in diesem Fall ein im wesentlichen quaderförmiges Gehäuse 9 mit einer Zugangsöffnung 19 in einer oberen Wandung. Durch die Zugangsöffnung hindurch ist ein erstes Lichtumlenkelement 1 in Form eines planaren Spiegels zu erkennen. Durch die Zugangsöffnung 19 hindurch kann ein Objekt in den Positionsbestimmungsraum des Positionsdetektor eingeführt werden. Der gezeigte Positionsdetektor ist geeignet, die Position einer Spitze eines länglichen Objekts zu vermessen. Ein durch eine Wandung in das Gehäuse 9 hineinführendes Kabel 18 enthält Leitungen zur Energieversorgung des Positionsdetektors und zur Datenübertragung.

In Figur 8 ist ein Robotersystem 50 mit einem Positionsdetektor 30 gezeigt. Das gezeigte Robotorsystem ist ein Pipettierrobotersystem, welches eine Pipette in drei Koordinatenrichtungen x, y und z bewegen kann, welche durch Pfeile des Koordinatesystems links oben in der Figur dargestellt sind. Das Objekt 20, dessen Position durch den Positionsdetektor 30 bestimmt werden kann, ist die Pipette des Pipettierroboters. Der Pipettierroboter umfasst Linearachsen zur Bewegung und Positionierung der Pipettenspitze. Die Pipette ist über einen flexiblen Schlauch mit einer hier nicht gezeigten Pumpeneinheit des Pipettierrobotors verbunden. In der gezeigten Darstellung befindet sich die Pipettenspitze direkt über der Zugangsöffnung des Positionsdetektors und könnte als nächstes beispielsweise in den Positionsbestimmungsraum abgesenkt werden, indem die die Pipette in z-Richtung verfahren wird. Wellplatten 51 sind auf einer Arbeitsfläche des Pipettierrobotersystem in Reichweite des Verfahrbereichs der Linearachsen angeordnet. Auf der Basis einer 3D-Positionsinformation über die Pipettenspitze, kann gemäss vorliegender Erfindung die Präzision, mit der die einzelnen Wells in den Wellplatten 51 angefahren werden können, deutlich erhöht werden. Aus Gründen der Darstellbarkeit sind hier nur Wellplatten mit 4 x 6 Wells gezeigt. Die Präzision beim Anfahren der Wellpositionen kommt besonders zum Tragen, wenn gleich grosse Wellplatten mit einer viel grösseren Anzahl Wells auf derselben Fläche verwendet werden, beispielsweise 8 x 12 Wells, 16 x 24 Wells oder gar 32 x 48 Wells.

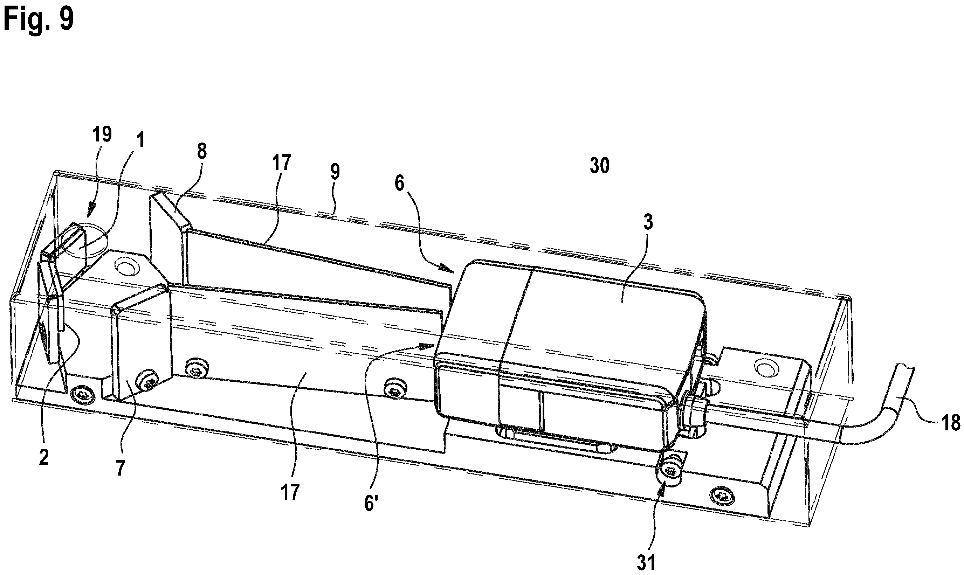

In Figur 9 ist eine Ausführungsform des Positionsdetektors 30 perspektivisch dargestellt. Der Positionsdetektor weist die schon in der Ausführungsform gemäss Fig. 3 besprochenen Elemente auf. Das Gehäuse 9 ist nur für diese Darstellung durchsichtig gezeigt, damit die Anordnung der Elemente innerhalb des Gehäuses erkennbar sind. Lichtquellen sind in dieser Ausführungsform direkt an der Frontseite der Kamera angebracht und in Fig. 9 nicht direkt sichtbar. Die Lichtumlenkelemente 1, 2 sind hier planare Spiegel. Die beiden planaren Spiegel definieren je eine erste und zweite Ebene, die sich in einer Geraden schneiden, die senkrecht zur optischen Achse der Kamera steht. Die beiden Spiegel füllen im Wesentlichen je eine Hälfte des Abbildungsbereichs der Kamera 3 aus. Eine Zugangsöffnung 19 im Gehäuse ermöglicht das Einführen von Objekten oder mindestens eines Teils eines Objekts in den Positionsbestimmungsraum des Positionsdetektors 30. Die Kamera weist einen Kabelanschluss zur Stromversorgung und zur Übertragung von Bilddaten über das Kabel 18 auf. Eine Bodenplatte trägt die Lichtumlenkelemente 1, 2, die Diffusor-Elemente 7, 8 und die Abschirmelemente 17 und bestimmt deren genaue Lage innerhalb des Positionsdetektors. Ein Mittel 31 für die Einstellung der Ausrichtung der Kamera innerhalb des Positionsdetektors ist als eine, in einen nach oben vorspringenden Bereich der Bodenplatte, eingeschraubte Innensechskant-Schraube ausgebildet, welche an ihrem Ende auf einen Sockel der Kamera 3 drückt. Mit der rechts unten in der Figure sichtbaren Innensechskant-Schraube und einer auf der gegenüberliegenden Seite entgegenwirkenden Schraube kann die genaue Position der Kamera gegenüber der Bodenplatte des Positionsdetektors eingestellt werden, d.h. das Mittel 31 ermöglicht eine Feineinstellung der Ausrichtung der Kamera gegenüber den anderen Elementen des Positionsdetektors.

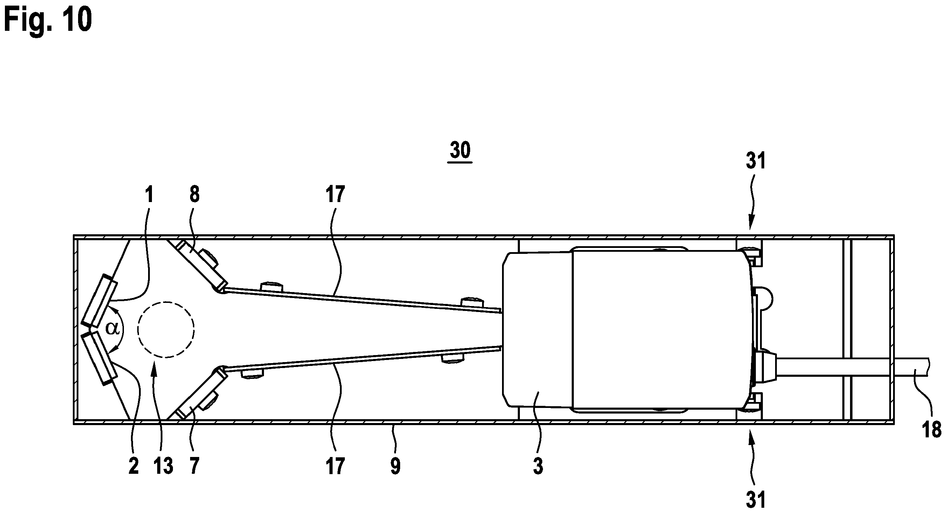

In Figur 10 ist ein Querschnitt durch die Ausführungsform des Positionsdetektors 30 gemäss Fig. 9 gezeigt. Die Querschnittsebene verläuft horizontal und ist knapp unterhalb der Deckplatte des Gehäuses gelegt, sodass die vier seitlichen Wandungen des Gehäuses 9 geschnitten werden und eine Aufsicht auf die innerhalb des Gehäuses angeordneten Elemente des Positionsdetektors möglich ist. Die von zwei Seiten auf einen Sockel der Kamera 3 wirkenden Mittel 31 für die Einstellung der Ausrichtung der Kamera sind deutlich sichtbar. Lichtumlenkelement 1, 2, Diffusorelemente 7, 8 und Abschirmelemente 17 sind spiegelsymmetrisch zu einer nicht eingezeichneten Mittelebene des Positionsdetektors angeordnet, wobei die Mittelebene senkrecht zur Querschnittsebene steht. Die Lichtumlenkelemente 1 und 2 sind hier ebene Spiegel und definieren ein Raumsegment mit Öffnungswinkel $\alpha$. In diesem Raumsegment liegen der Positionsbestimmungsraum und auch die Kamera. Im dargestellten Fall gilt $\alpha = 133°$, d.h. die Normalen der Spiegel sind um jeweils 23.5° gegenüber der Mit-

telebene geneigt ($\alpha$ = 180° - 2*23.5°). Die ungefähre Lage des Positionsbestimmungsraums 13 im Raumsegment mit Öffnungswinkel $\alpha$ ist durch einen gestrichelt gezeichnet Kreis angedeutet. Die genaue Lage des Positionsbestimmungsraums 13 in diesem Raumsegment wird bei der gezeigten Ausführungsform durch die Zugangsöffnung 19 (nur in Fig. 9 dargestellt) festgelegt. Es ergeben sich in der hier gezeigten Anordnung ein erster und ein zweiter Sichtbereich entsprechend der in Fig. 2 gezeigten Situation und Strahlengänge entsprechend der in Fig. 3 gezeigten Situation.

Zurückkommend auf die Eigenschaften und Elemente des Positionsdetektors, können folgende Merkmale im erfindungsgemässen Positionsdetektor umgesetzt sein.

Eine Fokusdistanz des Objektivs der Kamera kann einstellbar sein. Der Bildsensor der Kamera kann beispielsweise 600 Kilo-Pixel Auflösung oder eine höhere Auflösung haben. Subpixel-Auflösung kann durch Auswertung von Unschärfezonen an den abgebildeten Rändern eines Objekts durch Bildverarbeitungssoftware erreicht werden. Der Bildsensor kann beispielweise für schwarz-weiss Aufnahmen ausgelegt sein. Der Bildsensor kann beispielsweise auch zur Erzeugung von Rot-Grün-Blau-(RGB)-Bildern ausgelegt sein. Der Positionsdetektor kann beispielsweise auf einer Grundfläche von ca. 5 cm x 21 cm aufgebaut sein und damit einen sehr kleinen Platzbedarf innerhalb eines Robotersystems aufweisen. In dieser Dimension aufgebaut kann das Field-of-View (FOV) im Positionsbestimmungsraum ca. 2 cm gross sein. Bereits ab 600 Kilo-Pixel Auflösung der Kamera kann so 10 Mikrometer Auflösung bei den ermittelten räumlichen Koordinaten erreicht werden. Der Positionsdetektor kann Mittel für die Einstellung, insbesondere die Feineinstellung, der Ausrichtung des Positionsdetektors bezüglich extern vorgegebener Koordinatenachsen aufweisen. Der Positionsdetektor kann alternativ oder zusätzlich Mittel für die Einstellung insbesondere die Feineinstellung, der Ausrichtung der Kamera bezüglich anderer Elemente des Positionsdetektors aufweisen, beispielsweis zur Einstellung der Ausrichtung bezüglich eines Lichtumlenkelements oder bezüglich eines Gehäuses.

Bezugszeichenliste

1      erstes Lichtumlenkelement
2      zweites Lichtumlenkelement
3      Kamera
4      Bildsensor
5      Objektiv
6, 6'  Lichtquelle
7      erstes Diffusor-Element
8      zweites Diffusor-Element
9      Gehäuse
10     Abbildungsbereich
11     erster Sichtbereich
12     zweiter Sichtbereich
13     Positionsbestimmungsraum
14     Überlappungsbereich
15     optische Achse
16     Lichtstrahlen (der Lichtquelle)
17     Abschirmelement
18     Kabel
19     Zugangsöffnung
20     Objekt
30     Positionsdetektor
31     Mittel für die Einstellung der Ausrichtung
40     System zur Bestimmung von räumlichen Koordinaten
41     Auswerteeinheit
50     Robotersystem
51     Wellplatte
100    Verfahren zur Bestimmung räumlicher Koordinaten eines Objekts im Positionsbestimmungsraum eines Positionsdetektors
101    Verfahrensschritt Positionieren des Objekts
102    Verfahrensschritt Erzeugen einer Bildaufnahme
103    Verfahrensschritt Bestimmen der räumlichen Koordinaten des Objekts
104    Verfahrensschritt Auswerten des ersten Bildes
105    Verfahrensschritt Auswerten des zweiten Bildes
106    Verfahrensschritt Berechnen der räumlichen Koordinaten des Objekts
$\alpha$      Öffnungswinkel (des Raumsegments, welches den Positionsbestimmungsraum enthält)
H      Horizontalrichtung (in einer Bildaufzeichnung)
V      Vertikalrichtung (in einer Bildaufzeichnung)
x      x-Richtung (eines kartesischen Koordinatensystems)
y      y-Richtung (eines kartesischen Koordinatensystems)
z      z-Richtung (eines kartesischen Koordinatensystems)

Patentansprüche

1.  Positionsdetektor (30) zur Erzeugung von 3D-Positionsinformation eines Objekts (20) in einem Positionsbestimmungsraum (13) für das Objekt, wobei der Positionsdetektor umfasst:

    - eine Kamera (3) mit einem Objektiv (5) und einem Bildsensor (4), welche einen Abbildungsbereich (10) definiert,
    - im Abbildungsbereich (10) angeordnet mindestens ein erstes Lichtumlenkelement (1), wobei die Kamera (3) und das mindestens eine Lichtumlenkelement (1) dazu ausgelegt sind, auf dem Bildsensor (4) gleichzeitig mindestens zwei Bilder des Positionsbestimmungsraums (13) zu erzeugen und dabei ein erstes Bild durch am ersten Lichtumlenkelement (1) umgelenkte Lichtstrahlen, wobei sich die mindestens zwei Bilder bezüglich Betrachtungsrichtung des Positionsbestimmungsraums unterscheiden,

wobei der Positionsdetektor (30) weiter mindestens eine Lichtquelle (6, 6') umfasst, welche zur Beleuchtung des Positionsbestimmungsraums (13) angeordnet ist,

wobei der Positionsdetektor (30) ein erstes Diffusor-Element (7) zur diffusen Streuung von Licht umfasst, wobei die mindestens eine Lichtquelle (6, 6') so angeordnet ist, dass sie den Positionsbestimmungsraum indirekt über das erste Diffusor-Element (7) beleuchtet,

**dadurch gekennzeichnet, dass**

das erste Diffusor-Element (7) und das erste Lichtumlenkelement (1) einander bezüglich des Positionsbestimmungsraums (13) gegenüberliegend angeordnet sind.

2. Positionsdetektor (30) nach Anspruch 1, wobei der Positionsbestimmungsraum (13) im Abbildungsbereich (10) der Kamera (3) liegt.

3. Positionsdetektor (30) nach einem der Ansprüche 1 oder 2, wobei das erste Lichtumlenkelement (1) dazu ausgelegt ist, Licht an einer ersten ebenen Fläche umzulenken, welche eine erste Ebene definiert.

4. Positionsdetektor (30) nach einem der Ansprüche 1 bis 3, weiter umfassend ein zweites Lichtumlenkelement (2), und wobei die Kamera (3) und das zweite Lichtumlenkelement (2) dazu ausgelegt sind ein zweites Bild der mindestens zwei Bilder durch am zweiten Lichtumlenkelement (2) umgelenkten Lichtstrahlen zu erzeugen.

5. Positionsdetektor (30) nach Anspruch 4, wobei das zweite Lichtumlenkelement (2) dazu ausgelegt ist Licht an einer zweiten ebenen Fläche umzulenken, welche eine zweite Ebene definiert.

6. Positionsdetektor (30) nach Anspruch 3 und 5.

7. Positionsdetektor (30) nach Anspruch 6, wobei sich die erste und die zweite Ebene in einer gedachten Geraden schneiden, welche senkrecht zu einer optischen Achse (15) der Kamera (3) steht, insbesondere wobei die gedachte Gerade und die optische Achse eine Symmetrieebene des Positionsdetektors (30) definieren.

8. Positionsdetektor (30) nach Anspruch 6 oder 7, wobei die erste und zweite Ebene vier Raumsegmente definieren, wobei die Kamera (3) und der Positionsbestimmungsraum (13) in einem ersten Raumsegment dieser vier Raumsegmente angeordnet sind und wobei der Öffnungswinkel ($\alpha$) des ersten Raumsegments im Bereich von 100° bis 140° , insbesondere wobei der Öffnungswinkel ($\alpha$) des ersten Raumsegments im Bereich von 130.0° bis 135.0° liegt.

9. Positionsdetektor (30) nach einem der Ansprüche 6 bis 8, wobei die Kamera (3), das erste Lichtumlenkelement (1) und das zweite Lichtumlenkelement (2) derart in Bezug zu einem zentralen Punkt im Positionsbestimmungsraum angeordnet sind, dass ein erster Strahlengang vom zentralen Punkt über das erste Lichtumlenkelement durch das Objektiv zum Bildsensor und ein zweiter Strahlengang vom zentralen Punkt über das zweite Lichtumlenkelement durch das Objektiv zum Bildsensor im zentralen Punkt orthogonal zueinander verlaufen.

10. Positionsdetektor (30) nach einem der Ansprüche 4 bis 9, weiter umfassend ein zweites Diffusor-Element (8), wobei das zweite Diffusor-Element (8)und das zweite Lichtumlenkelement (2) einander bezüglich des Positionsbestimmungsraums (13) gegenüberliegend angeordnet sind und wobei die mindestens eine Lichtquelle (6) oder eine zweite Lichtquelle (6') so angeordnet ist, dass sie den Positionsbestimmungsraum (13) indirekt über das zweite Diffusor-Element (8) beleuchtet.

11. Positionsdetektor (30) nach einem der Ansprüche 1 bis 10, wobei der Positionsdetektor ein Gehäuse (9) umfasst, welches die Kamera (3), das erste Lichtumlenkelement (1), den Positionsbestimmungsraum (13) und gegebenenfalls das zweite Lichtumlenkelement (2) umgibt und wobei das Gehäuse (9) eine Zugangsöffnung (19) zum Einführen zumindest eines Endes des Objekts (20) in den Positionsbestimmungsraum (13) aufweist.

12. Robotersystem (50), insbesondere ein Pipettierrobotersystem, umfassend einen Positionsdetektor (30) nach einem der Ansprüche 1 bis 11.

13. Verfahren (100) zur Bestimmung räumlicher Koordinaten eines Objekts mittels eines Positionsdetektors gemäß einem der Ansprüche 1-11, wobei das Verfahren die Schritte umfasst:

a) Positionieren (101) zumindest eines Teils eines Objekts bezüglich einer Kamera;
b) Erzeugen (102) mindestens zweier Bilder des Objekts auf dem Bildsensor einer Kamera, wobei mindestens eines der Bilder durch eine Spiegelung des Objekts erzeugt ist und wobei die mindestens zwei Bilder das Objekt aus unterschiedlichen Betrachtungsrichtungen wiedergeben; und
c) Bestimmen (103) der räumlichen Koordinaten des Objekts aus den mindestens zwei Bildern,

**dadurch gekennzeichnet, dass**
das durch eine Spiegelung des Objekts erzeugte mindestens eine Bild als Schattenbild auf den Bildsensor der Kamera abgebildet wird.

14. Verfahren (100) gemäss Anspruch 13 zur Bestimmung räumlicher Koordinaten eines Objekts im Positionsbestimmungsraum eines Positionsdetektors (30) gemäss einem der Ansprüche 1 bis 11, wobei im Schritt b) des Erzeugens (102) der Bildaufnahme mittels der Kamera (3) des Positionsdetektors (30) erfolgt, wobei die Bildaufnahme das erste und das zweite Bild enthält und wobei das erste Bild mittels am ersten Lichtumlenkelement (1) umgelenkten Strahlengängen erzeugt wird,
wobei der Schritt c) des Bestimmens (103) der räumlichen Koordinaten des Objekts die Schritte umfasst:

c1) in der im Schritt b) erzeugten Bildaufnahme, Auswerten (104) des ersten Bildes, wobei eine erste Horizontal-Vertikal-Position des Objekts innerhalb des Bildes bestimmt wird;
c2) in der im Schritt b) erzeugten Bildaufnahme, Auswerten (105) des zweiten Bildes, wobei eine zweite Horizontal-Vertikal-Position des Objekts innerhalb des Bildes bestimmt wird;
c3) Berechnen (106) der räumlichen Koordinaten des Objekts in Funktion der ersten und zweiten Horizontal-Vertikal-Position.

15. Verfahren gemäss Anspruch 14, wobei im Schritt c3) das Berechnen der räumlichen Koordinaten des Objekts in Funktion des Mittelwerts der ersten und zweiten Horizontal-Vertikal-Position und des Abstands der ersten und zweiten Horizontal-Vertikal-Position erfolgt.

16. Verfahren zum Betrieb eines Robotersystems (50) nach Anspruch 12, umfassend die Schritte

- Durchführen der Schritte des Verfahrens (100) nach Anspruch 14 oder 15 zur Bestimmung einer ersten räumlichen Koordinate eines Referenzpunktes eines ersten Objekts, während das erste Objekt vom Robotersystem im Positionsbestimmungsraum gehalten wird;
- Festlegen eines ersten Parametersatzes eines ersten Bewegungsablaufs des Robotersystems, mittels dessen das Robotersystem den Referenzpunkt des ersten Objekts vom Positionsbestimmungsraum an eine Zielposition bringt;
- Durchführen der Schritte des Verfahrens nach Anspruch 14 oder 15 zur Bestimmung einer zweiten räumlichen Koordinate eines Referenzpunktes eines zweiten Objekts, während das zweite Objekt vom Robotersystem im Positionsbestimmungsraum gehalten wird;

- Korrigieren des ersten Parametersatzes des ersten Bewegungsablaufs in Funktion einer Differenz zwischen erster und zweiter räumlicher Koordinate zum Erhalt eines zweiten Parametersatzes für einen zweiten Bewegungsablauf des Robotersystems;
- Durchführen des zweiten Bewegungsablaufs basierend auf dem zweiten Parametersatz mit dem zweiten Objekt.

17. Anwendung des Verfahrens nach Anspruch 16, wobei das Robotersystem ein Pipettierrobotersystem ist und wobei das erste Objekt eine Pipettenspitze ist und das zweite Objekt eine Pipettenspitze ist.

18. System zur Bestimmung von räumlichen Koordinaten eines Objekts in einem Positionsbestimmungsraum, wobei das System einen Positionsdetektor nach einem der Ansprüche 1 bis 11 und eine Auswerteeinheit umfasst, wobei der Bildsensor und die Auswerteeinheit zur Übertragung von Bilddaten wirkverbunden sind und wobei das System dazu eingerichtet ist, das Verfahren nach einem der Ansprüche 13 bis 15 durchzuführen.

**Claims**

1. Position detector (30) for generating 3D position information of an object (20) in a position determination space (13) for the object, wherein the position detector comprises:

- a camera (3) having a lens (5) and an image sensor (4) defining an imaging area (10),
- at least one first light deflecting element (1) arranged in the imaging area (10),

wherein the camera (3) and the at least one light deflecting element (1) are adapted to simultaneously generate on the image sensor (4) at least two images of the position determination space (13) and thus a first image by light beams deflected at the first light deflecting element (1), wherein the at least two images differ with respect to the viewing direction of the position determination space, wherein the position detector (30) further comprises at least one light source (6, 6') arranged to illuminate the position determination space (13), wherein the position detector (30) comprises a first diffuser element (7) for the diffused scattering of light, wherein the at least one light source (6, 6') is arranged to illuminate the position determination space indirectly via the first diffuser element (7), **characterized in that** the first diffuser element (7) and the first light deflecting element (1) are arranged opposite each other with respect to the position determination space (13).

**2.** Position detector (30) according to claim 1, wherein the position determination space (13) is located in the imaging area (10) of the camera (3).

**3.** Position detector (30) according to one of claims 1 or 2, wherein the first light deflecting element (1) is adapted to deflect light at a first planar surface defining a first plane.

**4.** Position detector (30) according to one of claims 1 to 3, further comprising a second light deflecting element (2), and wherein the camera (3) and the second light deflecting element (2) are adapted to generate a second image of the at least two images by light beams deflected at the second light deflecting element (2).

**5.** Position detector (30) according to claim 4, wherein the second light deflecting element (2) is adapted to deflect light at a second planar surface defining a second plane.

**6.** Position detector (30) according to claim 3 and 5.

**7.** Position detector (30) according to claim 6, wherein the first and the second plane intersect in an imaginary straight line which is perpendicular to an optical axis (15) of the camera (3), in particular wherein the imaginary straight line and the optical axis define a symmetry plane of the position detector (30).

**8.** Position detector (30) according to claim 6 or 7, wherein the first and second planes define four space segments, wherein the camera (3) and the position determination space (13) are arranged in a first space segment of these four space segments and wherein the aperture angle ($\alpha$) of the first space segment is in the range of 100° to 140°, in particular wherein the aperture angle ($\alpha$) of the first space segment is in the range of 130.0° to 135.0°.

**9.** Position detector (30) according to one of claims 6 to 8, wherein the camera (3), the first light deflecting element (1) and the second light deflecting element (2) are arranged with respect to a central point in the position determination space in such a way that a first beam path from the central point via the first light deflecting element through the lens to the image sensor and a second beam path from the central point via the second light deflecting element through the lens to the image sensor in the central point extend orthogonally to each other at the central point.

**10.** Position detector (30) according to one of claims 4 to 9, further comprising a second diffuser element (8), wherein the second diffuser element (8) and the second light deflecting element (2) are arranged opposite each other with respect to the position determination space (13), and wherein the at least one light source (6) or a second light source (6') is arranged such that it illuminates the position determination space (13) indirectly via the second diffuser element (8).

**11.** Position detector (30) according to one of claims 1 to 10, wherein the position detector comprises a housing (9) which surrounds the camera (3), the first light deflecting element (1), the position determination space (13) and optionally the second light deflecting element (2), and wherein the housing (9) has an access opening (19) for introducing at least one end of the object (20) into the position determination space (13).

**12.** Robotic system (50), in particular a pipetting robotic system, comprising a position detector (30) according to one of claims 1 to 11.

**13.** Method (100) for determining spatial coordinates of an object by means of a position detector according to one of claims 1-11, wherein the method comprises the steps of:

   a) positioning (101) at least a portion of an object with respect to a camera;
   b) generating (102) at least two images of the object on the image sensor of a camera, wherein at least one of the images is generated by a reflection of the object and wherein the at least two images represent the object from different viewing directions; and
   c) determining (103) the spatial coordinates of the object from the at least two images,

   **characterized in that**
   the at least one image generated by a reflection of the object is imaged as a shadow image on the image sensor of the camera.

**14.** Method (100) according to claim 13 for determining spatial coordinates of an object in the position determination space of a position detector (30) according to one of claims 1 to 11, wherein in step b) of generating (102) the image recording is carried out by means of the camera (3) of the position detector (30), wherein the image recording contains the first and the second image and wherein the first image is generated by means of beam paths deflected at the first light deflecting element (1),
wherein step c) of determining (103) the spatial coordinates of the object comprises the steps:

   c1) in the image recording generated in step b), evaluating (104) the first image, wherein a first horizontal-vertical position of the object within the image is determined;

c2) in the image recording generated in step b), evaluating (105) the second image, wherein a second horizontal-vertical position of the object within the image is determined;
c3) calculating (106) the spatial coordinates of the object as a function of the first and second horizontal-vertical positions.

15. Method according to claim 14, wherein in step c3) the calculation of the spatial coordinates of the object as a function of the average of the first and second horizontal-vertical positions and the distance of the first and second horizontal-vertical positions is carried out.

16. Method for operating a robotic system (50) according to claim 12, comprising the steps of

- carrying out the steps of the method (100) according to claim 14 or 15 for determining a first spatial coordinate of a reference point of a first object while the first object is held by the robotic system in the position determination space;
- determining a first set of parameters of a first motion sequence of the robotic system, by means of which the robotic system moves the reference point of the first object from the position determination space to a target position;
- performing the steps of the method according to claim 14 or 15 for determining a second spatial coordinate of a reference point of a second object while the second object is held by the robotic system in the position determination space;
- correcting the first set of parameters of the first motion sequence as a function of a difference between the first and second spatial coordinates to obtain a second set of parameters for a second motion sequence of the robotic system;
- performing the second motion sequence based on the second parameter set with the second object.

17. Application of the method according to claim 16, wherein the robotic system is a pipetting robotic system and wherein the first object is a pipette tip and the second object is a pipette tip.

18. System for determining spatial coordinates of an object in a position determination space, wherein the system comprises a position detector according to one of claims 1 to 11 and an evaluation unit, wherein the image sensor and the evaluation unit are operatively connected for transmitting image data, and wherein the system is adapted to perform the method according to one of claims 13 to 15.

**Revendications**

1. Détecteur de position (30) pour générer une information de position 3D d'un objet (20) dans un espace de détermination de la position (13) de l'objet, le détecteur de position comprenant :

- une caméra (3) avec un objectif (5) et un capteur d'image (4) qui définit une zone de reproduction (10),
- au moins un premier élément de renvoi de la lumière (1) agencé dans la zone de reproduction (10),

la caméra (3) et le au moins un élément de renvoi de la lumière (1) étant conçus pour générer sur le capteur d'image (4) simultanément au moins deux images de l'espace de détermination de la position (13) et ainsi une première image par les faisceaux lumineux renvoyés sur le premier élément de renvoi de la lumière (1), les au moins deux images différant quant à la direction de visualisation de l'espace de détermination de la position,
le détecteur de position (30) comprenant en outre au moins une source de lumière (6, 6') qui est agencée pour éclairer l'espace de détermination de la position (13), le détecteur de position (30) comprenant un premier élément diffuseur (7) pour la dispersion diffuse de la lumière, la au moins une source de lumière (6, 6') étant agencée de façon à éclairer indirectement l'espace de détermination de la position via le premier élément diffuseur (7),
**caractérisé en ce que** le premier élément diffuseur (7) et le premier élément de renvoi de la lumière (1) sont agencés à l'opposé l'un de l'autre par rapport à l'espace de détermination de la position (13).

2. Détecteur de position (30) selon la revendication 1, dans lequel l'espace de détermination de la position (13) se trouve dans la zone de reproduction (10) de la caméra (3).

3. Détecteur de position (30) selon l'une des revendications 1 ou 2, dans lequel le premier élément de renvoi de la lumière (1) est conçu pour renvoyer la lumière au niveau d'une première surface plane qui définit un premier plan.

4. Détecteur de position (30) selon l'une des revendications 1 à 3, comprenant en outre un deuxième élément de renvoi de la lumière (2), et dans lequel la caméra (3) et le deuxième élément de renvoi de la lumière (2) sont conçus pour générer une deuxième image des au moins deux images par des faisceaux de lumière renvoyés sur le deuxième élément de renvoi de la lumière (2).

5. Détecteur de position (30) selon la revendication 4, dans lequel le deuxième élément de renvoi de la lumière (2) est conçu pour renvoyer la lumière sur une deuxième surface plane qui définit un deuxième plan.

6. Détecteur de position (30) selon les revendications 3 et 5.

7. Détecteur de position (30) selon la revendication 6, dans lequel le premier plan et le deuxième plan se coupent en une ligne droite imaginaire qui est perpendiculaire à un axe optique (15) de la caméra, dans lequel en particulier la droite imaginaire et l'axe optique définissent un plan de symétrie du détecteur de position (30).

8. Détecteur de position (30) selon la revendication 6 ou 7, dans lequel le premier et le deuxième plans définissent quatre segments spatiaux, la caméra (3) et l'espace de détermination de la position (13) étant agencés dans un premier segment de ces quatre segments spatiaux, et l'angle d'ouverture ($\alpha$) du premier segment spatial étant compris dans la plage allant de 100° à 140°, l'angle d'ouverture ($\alpha$) du premier segment spatial étant en particulier compris dans la plage allant de 130,0° à 135,0°.

9. Détecteur de position (30) selon l'une des revendications 6 à 8, dans lequel la caméra (3), le premier élément de renvoi de la lumière (1) et le deuxième élément de renvoi de la lumière (2) sont agencés de telle sorte par rapport à un point central dans l'espace de détermination de la position qu'une première trajectoire de faisceau s'étend depuis le point central à travers l'objectif jusqu'au capteur d'image en passant par le premier élément de renvoi de la lumière, et une deuxième trajectoire de faisceau s'étend depuis le point central à travers l'objectif jusqu'au capteur d'image en passant par le deuxième élément de renvoi de la lumière, les deux trajectoires étant orthogonales entre elles au niveau du point central.

10. Détecteur de position (30) selon l'une des revendications 4 à 9, comprenant en outre un deuxième élément diffuseur (8), dans lequel le deuxième élément diffuseur (8) et le deuxième élément de renvoi de la lumière (2) sont agencés opposés l'un à l'autre par rapport à l'espace de détermination de la position (13), et dans lequel la au moins une source de lumière (6) ou une deuxième source de lumière (6') est agencée de telle façon qu'elle éclaire l'espace de détermination de la position (13) indirectement via le deuxième élément diffuseur (8).

11. Détecteur de position (30) selon l'une des revendications 1 à 10, le détecteur de position comprenant un boîtier (9) qui entoure la caméra (3), le premier élément de renvoi de la lumière (1), l'espace de détermination de la position (13) et le cas échéant le deuxième élément de renvoi de la lumière (2), le boîtier (9) présentant une ouverture d'accès (19) pour introduire au moins une extrémité de l'objet (20) dans l'espace de détermination de la position (13).

12. Système robotisé (50), en particulier système robotisé de pipetage, comprenant un détecteur de position (30) selon l'une des revendications 1 à 11.

13. Procédé (100) pour déterminer les coordonnées spatiales d'un objet à l'aide d'un détecteur de position selon l'une des revendications 1 à 11, le procédé comprenant les étapes consistant à :

a) positionner (101) au moins une partie d'un objet par rapport à une caméra ;
b) générer (102) au moins deux images de l'objet sur le capteur d'image d'une caméra, au moins l'une des images étant produite par réflexion de l'objet et les au moins deux images de l'objet étant restituées depuis différents points de vue ; et
c) déterminer (103) les coordonnées spatiales de l'objet à partir des au moins deux images,

**caractérisé en ce que** la au moins une image produite par réflexion de l'objet est reproduite sous forme de silhouette sur le capteur d'image de la caméra.

14. Procédé (100) selon la revendication 13 pour déterminer les coordonnées spatiales d'un objet dans l'espace de détermination de la position d'un détecteur de position (30) selon l'une des revendications 1 à 11, dans lequel à l'étape b) de la génération (102), la prise de vue se fait à l'aide de la caméra (3) du détecteur de position (30), la prise de vue contenant la première et la deuxième image et la première image étant produite à l'aide des trajectoires de faisceau renvoyées sur le premier élément de renvoi de la lumière (1),
l'étape c) de détermination (103) des coordonnées spatiales de l'objet comprenant les étapes consistant à :

c1) dans la prise de vue produite à l'étape b), analyser (104) la première image en déterminant une première position horizontale-verticale de l'objet dans l'image ;
c2) dans la prise de vue produite à l'étape b), analyser (105) la deuxième image en déterminant une deuxième position horizontale-verticale de l'objet dans l'image ;

c3) calculer (106) les coordonnées spatiales de l'objet en fonction de la première et de la deuxième position horizontale-verticale.

15. Procédé selon la revendication 14, dans lequel à l'étape c3) le calcul des coordonnées spatiales de l'objet se fait en fonction de la moyenne de la première et de la deuxième position horizontale-verticale et de la distance de la première et de la deuxième position horizontale-verticale.

16. Procédé pour faire fonctionner un système robotisé (50) selon la revendication 12, comprenant les étapes consistant à :

- réaliser les étapes du procédé (100) selon la revendication 14 ou 15 pour déterminer une première coordonnée spatiale d'un point de référence d'un premier objet pendant que le premier objet est maintenu dans l'espace de détermination de la position par le système robotisé ;
- déterminer un premier ensemble de paramètres d'une première séquence de mouvements du système robotisé, qui permettra au système robotisé d'amener le point de référence du premier objet depuis l'espace de détermination de la position à une position cible ;
- réaliser les étapes du procédé selon la revendication 14 ou 15 pour déterminer une deuxième coordonnée spatiale d'un point de référence d'un deuxième objet pendant que le deuxième objet est maintenu dans l'espace de détermination de la position par le système robotisé ;
- corriger le premier ensemble de paramètres de la première séquence de mouvements en fonction de la différence entre la première et la deuxième coordonnée spatiale pour obtenir un deuxième ensemble de paramètres pour une deuxième séquence de mouvements du système robotisé ;
- réaliser la deuxième séquence de mouvements sur la base du deuxième ensemble de paramètres avec le deuxième objet.

17. Utilisation du procédé selon la revendication 16, le système robotisé étant un système robotisé de pipetage et le premier objet étant un embout de pipette et le deuxième objet étant un embout de pipette.

18. Système pour déterminer les coordonnées spatiales d'un objet dans un espace de détermination de la position, le système comprenant un détecteur de position selon l'une des revendications 1 à 11 et une unité d'évaluation, le capteur d'image et l'unité d'évaluation étant en liaison active pour le transfert de données d'images, et le système étant conçu pour réaliser le procédé selon l'une des revendications

13 à 15.

# Fig. 1

# Fig. 2

## Fig. 3

## Fig. 4

# Fig. 5

**100**

START

101 — a) Positionieren des Objekts

102 — b) Erzeugen einer Bildaufzeichnung

103 {

104 — c1) Auswerten des ersten Bildes

105 — c2) Auswerten des zweiten Bildes

106 — c3) Berechnen der räumlichen Koordinaten des Objekts

ENDE

# Fig. 6

# Fig. 7

# Fig. 8

# Fig. 9

EP 3 745 081 B1

Fig. 10

**EP 3 745 081 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1489425 B1
- DE 102006038161 A1